# EUROPÄISCHE PATENTSCHRIFT

(11) **EP 0 975 119 B1**
(45) Veröffentlichungstag und Bekanntmachung des Hinweises auf die Patenterteilung: **09.10.2002**
(21) Anmeldenummer: 99110855.6
(22) Anmeldetag: 07.06.1999
(51) Int. Cl.: H04L 9/08, C09K 19/02, G02F 1/133, G02F 1/1347

(54) **Quantenkryptographiesystem zur gesicherten Übertragung zufälliger Schlüssel unter Verwendung des Polarisationsstellverfahrens**
Quantum cryptography system for the secure transmission of a random key by use of the polarisation method
Système de cryptographie quantique pour la transmission d'une clé aléatoire en utilisant le procédé de polarisation

(30) Priorität: 24.07.1998 DE 19833330
(43) Veröffentlichungstag der Anmeldung: 26.01.2000
(73) Patentinhaber: Deutsche Telekom AG, 53113 Bonn (DE)
(72) Erfinder: Dultz, Wolfgang Prof. Dr. Dr., 65936 Frankfurt/M. (DE); Schmitzer, Heidrun Dr., 93051 Regensburg (DE); Beresnev, Leonid Dr., Columbia, MD 21044 (US); Hildebrandt, Eric, 60487 Frankfurt/M. (DE)

(56) Entgegenhaltungen:
- WO-A-96/07951
- DE-A- 19 624 769
- TOWNSEND P D ET AL: "DESIGN OF QUANTUM CRYPTOGRAPHY SYSTEMS FOR PASSIVE OPTICAL NETWORKS" ELECTRONICS LETTERS, Bd. 30, Nr. 22, 27. Oktober 1994 (1994-10-27), Seiten 1875-1877, XP000479775 ISSN: 0013-5194
- BREGUET J ET AL: "QUANTUM CRYPTOGRAPHY WITH POLARIZED PHOTONS IN OPTICAL FIBRES EXPERIMENT AND PRACTICAL LIMITS" JOURNAL OF MODERN OPTICS, Bd. 41, Nr. 12, 1. Dezember 1994 (1994-12-01), Seiten 2405-2412, XP002053122

## Beschreibung

Die Erfindung bezieht sich auf ein Quantenkryptographieverfahren zur gesicherten Übertragung zufälliger Schlüssel unter Verwendung des Polarisationsstellverfahrens der im Oberbegriff des Patentanspruchs 1 näher definierten Art. Derartige Quantenkryptographieverfahren sind zuerst von S. F. Seward et al. in Quantum Opt. -3 201 (1991) und danach z. B. von Ch. Bennet in Phys. Rev. Lett. 68 3121 (1992); sowie von P. D. Townsend et al. in Electronics Letters 30 1875 (1994) und I. D. Franson et al. in Electronics Letters 31 232 (1995) beschrieben.

Die Quantenkryptographie ist eine neuartige Methode zur sicheren Übertragung zufälliger Schlüssel über öffentlich zugängliche optische Nachrichtenkanäle, die zur Nachrichtenverschlüsselung dienen. Abhörversuche stören die Erzeugung des Schlüssels, indem sie die ausgetauschten Quantenzustände des Lichtes verändern und führen daher nicht zu brauchbaren Informationen über den Schlüssel. Abhörversuche lassen sich feststellen.

Eine Nachricht kann nur dann sicher übertragen werden, wenn sie grundsätzlich nicht abgehört und verstanden werden kann, auch nicht durch den Netzebetreiber selbst. Dazu muß ein zufälliger Schlüssel, der so lang wie die Nachricht selbst ist, sicher zwischen Sender und Empfänger ausgetauscht werden. Hierfür sind quantenoptische Verfahren angegeben worden, die im folgenden kurz beschrieben werden.

Die verschiedenen physikalischen Eigenschaften des Quantenzustandes des Lichtes lassen sich nicht gleichzeitig genau messen. Am deutlichsten wird dies für die Polarisation. Da sich diese aus zwei unabhängigen Polarisationsrichtungen zusammensetzt, und die Polarisationsanalyse darin besteht, ein Photon hinter einem Analysator zu detektieren (und dabei zu vernichten), kann mit einer einzelnen Messung immer nur eine Komponente des Polarisationszustandes bestimmt werden, die anderen bleiben unbestimmt.

Ein Lauscher muß das von ihm abgezweigte Photon messen und dann ersetzen, damit sein Fehlen nicht auffällt. Er kann aber den Polarisationszustand nicht genau bestimmen und hat daher 1. keine genaue Information und damit 2. keine Möglichkeit, das Photon genau zu duplizieren. Dies wird zur sicheren Verteilung eines statistischen Schlüssels zwischen einem Sender und einem Empfänger ausgenutzt. Sender und Empfänger können die Nachricht genau empfangen, da sie nachträglich zusätzliche Informationen über die Basissysteme, in denen die Polarisation gemessen wird, austauschen. Dem Lauscher nützen diese Informationen dann nichts mehr.

Ein wesentliches Merkmal der bekannten Verfahren zur Quantenkryptographie ist die Umschaltung eines Polarisators am Ort des Senders und die Umschaltung eines Analysators am Ort des Empfängers. Dazu werden elektrooptische Modulatoren verwendet, die entweder nach einem Vorschlag von J. Breguet et al. im J. of Mod. Optics 41 2405 eine elektrooptisch schaltbare Weiche enthalten, die das Licht auf vorgegebenen Kanälen einzelnen fest eingestellten Polarisatoren oder Analysatoren zusenden, oder die nach einem Vorschlag von P. Townsend et al. im J. of Mod. Optics 41 2425 (1994) als schaltbare Retardierungselemente ausgebildet sind.

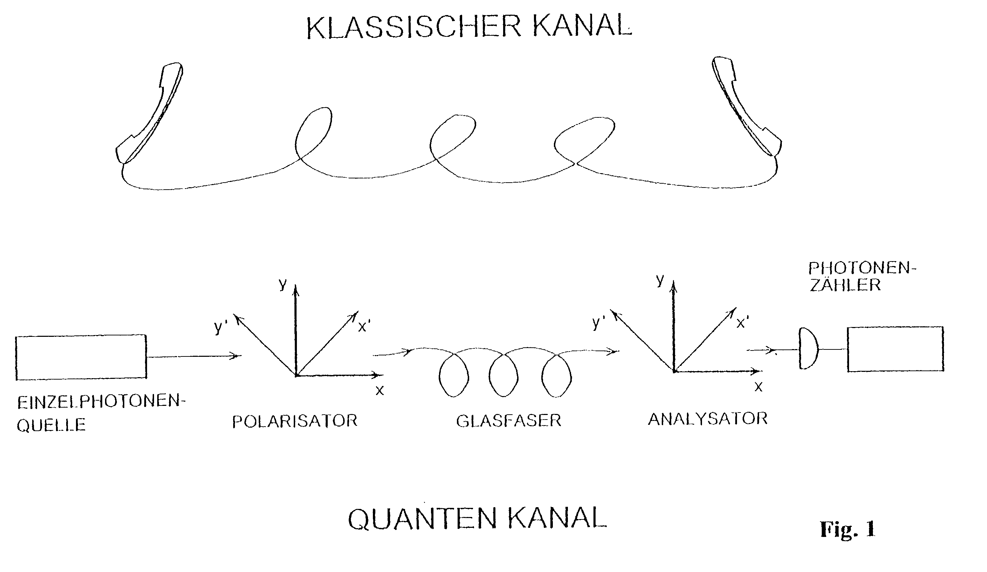

Fig. 1 zeigt das Prinzip einer bekannten Vorrichtung zur Quantenkryptographie nach dem Polarisationsstellverfahren. Der Sender hat eine Quelle einzelner Photonen, z. B. einen abgeschwächten Laser, der Empfänger einen Detektor für einzelne Photonen, außerdem besitzen beide einen Polarisationssteller z. B. einen linear polarisierenden Analysator, der in die Stellungen x, x', y oder y' gedreht werden kann.

Sender und Empfänger sind durch einen Quantenkanal, in dem einzelne Photonen ohne aktive Verstärkung geleitet werden, und über eine klassische Leitung, wie z. B. Telefon, Funk, verbunden. Zwei Zufallsgeneratoren verstellen die Analysatoren unabhängig bei Sender und Empfänger nach jeder Übertragung eines einzelnen Quantenzustandes (Photons).

An Stelle der Polarisationsmessung kann auch eine interferometrische Phasenmessung zur quantenkryptographischen Schlüsselverteilung nach einem Vorschlag von P. Townsend et al. im J. of Mod. Optics 41 2425 (1994) verwendet werden. Hierbei muß ein definierter optischer Weg in zwei Interferometer bei Sender und Empfänger eingefügt werden. Dies kann durch Verstellen eines Spiegels oder durch elektrooptische Retardierung in geeigneten Materialien wie z. B. Lithiumniobat erfolgen.

Von Nachteil sind bei den bekannten Verfahren der Quantenkryptographie nach dem Polarisationsstellverfahren, die eigentlich durch die Übertragungskanäle hohe Geschwindigkeiten erlauben, die großen Umschaltzeiten der hierfür vorgesehenen optischen Modulatoren.

Es ist ferner aus WO 96/07951 für ein Quantenkryptographieverfahren die Verwendung von Flüssigkristallzellen bekannt, die lediglich diskrete Schaltstellungen (Drehwinkel) zulassen, wobei jeweils zwei Zellen, nämlich eine Halbwellenzelle und eine Viertelwellenzelle, hintereinander angeordnet sind. Auch diese Zellen sind äußerst langsam und benötigen außerdem hohe Schaltspannungen.

Die Erfindung hat sich die Aufgabe gestellt, ein schnelleres Verfahren zur Quantenkryptographie nach dem Polarisationsstellverfahren zu schaffen.

Diese Aufgabe löst die Erfindung mit den im Kennzeichen des Patentanspruch 1 aufgeführten Merkmalen.

In den Kennzeichen der Unteransprüche 2 bis 5 sind vorteilhafte Aus- und Weiterbildungsmöglichkeiten hierzu aufgeführt.

Nachstehend wird die Erfindung anhand von Ausführungsbeispielen näher erläutert. In den zugehörigen Zeichnungen zeigen die:
- Fig. 1: das bekannte Prinzip der Quantenkryptographie,
- Fig. 2: das vorgeschlagene Quantenkryptographieverfahren und
- Fig. 3: den Modulator mit Polarisationsveränderungen auf der Poincaré Kugel.

Zur Vereinfachung und Verbesserung der bekannten Quantenkryptographieverfahren nach Fig. 1 werden Flüssigkristallelemente als Polarisationsteller und Retrardierungselemente für die Quantenkryptographie vorgeschlagen, die als elektrisch drehbare lambda/2-Platten ausgebildet sind.

Das Prinzip solcher Elemente ist aus DE 196 24 769.1 bekannt. Ihre Verwendung in Quantenkryptographieverfahren ist Gegenstand dieses Vorschlages.

Eine lambda/2-Platte dreht linear polarisiertes Licht um einen Winkel 2α, wenn es unter dem Winkel α relativ zur schnellen Achse auf die Platte fällt. Dabei geht kein Licht verloren wie es bei einem Analysator der Fall wäre. Außerdem wird bei dem Verfahren der Drehwinkel verdoppelt, so daß der elektrische Aufwand unter Umständen halbiert werden kann.

Die neuen Flüssigkristallelemente können Schaltzeiten im Mikrosekundenbereich und darunter erreichen.

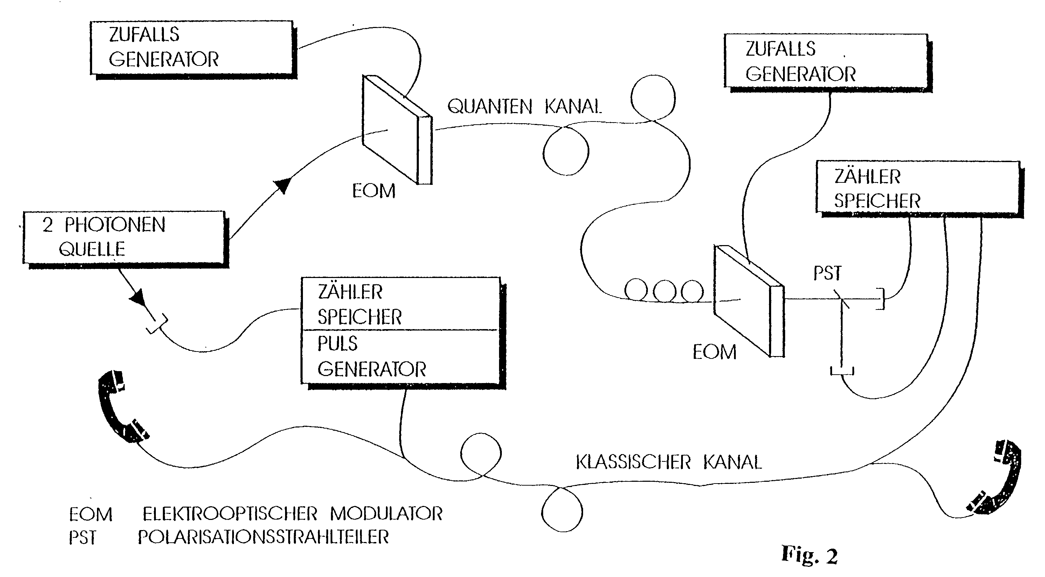

Das vorgeschlagene Quantenkryptographieverfahren zwischen einem Sender und einem Empfänger ist in Abb. 2 dargestellt.

Als Quelle einzelner Photonen wird ein nichtlinearer Kristall oder ein anderes nichtlineares Material vorgeschlagen, in dem das hochenergetische Photon eines Lasers in zwei niederenergetische zerfällt. Um den Energiesatz zu erfüllen, geschieht dieser Zerfall so, daß beide Photonen gleichzeitig entstehen und das eine zum Nachweis der Existenz des anderen als Triggerphoton detektiert werden kann. Dieses zweite Photon erhält eine feste Polarisation und dient zur Schlüsselerzeugung.

In dem ersten elektrooptischen Modulator wird die Polarisation des Photons zwischen zwei optischen Basissystemen statistisch hin und her geschaltet, z. B. zwischen x, x', y, y' wie in Fig. 1; aber auch andere Basissysteme kommen in Frage.

Das Photon wird dann in eine hochtransparente Faserstrecke eingespeist. Diese Faserstrecke ist im allgemeinen eine Standardfaser, welche die Polarisation des Lichtes zeitabhängig verändert. Auch Satellitenübertragung, bei der das Photon frei durch den Raum läuft, kommt in Frage, bevorzugt bei den Wellenlängen der Frauenhoferschen Linien der Sonne. Wichtig ist, daß auf Verstärkung des Lichtes verzichtet wird.

Am Ende der Faserstrecke beim Empfänger wird das Licht durch einen Polarisationssteller in eine bezüglich des Senders definierte Korrelation gebracht. Dies wird dadurch erreicht, daß zum Test etwa alle 1/100 Sekunde ein intensiver Lichtimpuls gleicher Farbe mit definierter Polarisation beim Sender in die Faser eingespeist wird. Die Polarisation dieses Impulses wird mit den noch zu beschreibenden Detektoren beim Empfänger analysiert und der elektrooptische Modulator (EDM) beim Empfänger (oder beim Sender) so verstellt, daß die für die Quantenkryptographie notwendige Korrelation der Sender und Empfängerseite eingehalten wird.

Da es zum Nachstellen der Polarisationsveränderungen in der Faser nicht genügt, nur das Achsenkreuz der allgemeinen elliptischen Polarisation P am Ende der Faser nachzuorientieren, muß zusätzlich zu der beschriebenen elektrisch verstellbaren lambda/2-Platte eine zweite elektrisch verstellbare lambda/4-Platte eingefügt werden. Andere Anordnungen sind möglich.

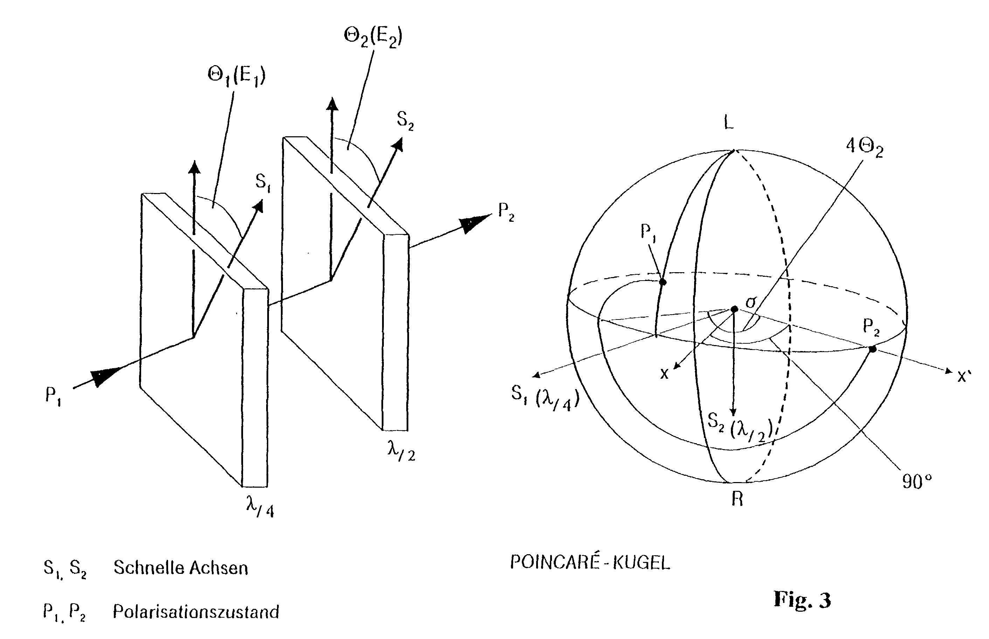

Fig. 3 zeigt den Modulator und die entsprechende Polarisationsveränderung auf der Poincaré Kugel. Der zweite elektrooptische Modulator verschiebt das Basissystem auf dem Äquator der Poincaré Kugel und dient somit neben dem Ausgleich der Faserdoppelbrechung auch zur Quantenkryptographie.

Hinter dem Modulator wird der Lichtweg durch einen polarisierenden Strahlteiler aufgeteilt und die beiden Polarisationskomponenten werden mit Einzelphotonendetektoren vermessen, wie Fig. 2 zeigt. Die Ergebnisse werden in einem Rechner weiter verarbeitet. Um Fehlzählungen zu vermindern, wird durch das Triggerphoton im Sender ein Impuls erzeugt, der zeitlich gleich mit dem Übertragungsphoton beim Empfänger eintrifft und dadurch Koinzidenzzählung ermöglicht.

Der notwendige klassische Kanal, über den die Zusatzinformationen ausgetauscht werden, ist z. B. als klassischer Übertragungskanal bei einer anderen Wellenlänge (WDM) ausgebildet, verläuft aber auf der selben quantenübertragenden Glasfaser. Dabei kann das Abhören zusätzlich durch klassische Verfahren erschwert werden.

Bei dieser Übertragungsart kann die Polarisationserhaltung in der quantenübertragenden Faser und den anschließenden Komponenten vorteilhaft öfters durch Messung überprüft und mit Hilfe von elektrooptischen Modulatoren oder in Verbindung mit einer anderen Retardierungsplatte wie einer lambda/2-Platte Fig. 3 nachgestellt werden. Die Messung des Polarisationszustandes des Lichtes, das aus der Quantenfaser austritt, erfolgt mit Hilfe bekannter ellipsometrischer Methoden an einem intensiven optischen Impuls, der die gleiche spektrale Trägerfrequenz (Wellenlänge) hat, wie das schlüsselübertragende Photon. Dazu wird der intensive Impuls beim Empfänger mit einem Strahlteiler ausgekoppelt und analysiert.

Falls die Auskopplung nicht vollständig erfolgt, muß der Photonendetektor beim Empfänger durch einen Verschluß oder ähnlichem vor dem intensiven Impuls geschützt werden. Mit Hilfe der Polarisationssteller nach Fig. 3 wird der nachgestellte Polarisationszustand anschließend statistisch in das x, y oder das x' y' Basissystem gedreht.

## Patentansprüche

1. Quantenkryptographieverfahren zur gesicherten Übertragung zufälliger Schlüssel unter Verwendung des Polarisationsstellverfahrens, bei dem senderseitg statistische binäre Zahlenfolgen generiert werden, welche die Polarisation von einzelnen Photonen, die über einen Quantenkanal gesendet werden, verändern, bei dem empfängerseitig eine Analyse der Polarisation und nachfolgend eine Zählung von Photonen durchgeführt wird und wobei die Polarisationsänderung durch elektrooptische Flüssigkristallmodulatoren erfolgt, die als elektrisch drehbare Verzögerungsplatten ausgebildet sind, **dadurch gekennzeichnet, daß** deren beide doppelbrechende Achsen, nachfolgend Indikatrix genannt, durch das angelegte elektrische Feld um einen, von dessen Stärke abhängigen Winkel θ gedreht werden, wodurch sie als lambda/2 Verzögerungsplatte elliptisch polarisiertes Licht, das auf die Platte fällt, um den Winkel 2 θ drehen.

2. Quantenkryptographieverfahren nach Anspruch 1, **dadurch gekennzeichnet, daß** zum Erzeugen größerer Drehwinkel mehrere lambda/2 Verzögerungsplatten derart hintereinander angeordnet werden, daß die schnellen Achsen jeder einzelnen Platte bei Feld Null unter einem Winkel β ≤ 2 Ω stehen, wobei Ω der maximale Winkel ist, um den die Indikatrix des Einzelelementes vom Feld drehbar ist.

3. Quantenkryptographieverfahren nach Anspruch 1, **dadurch gekennzeichnet, daß** als Quantenkanal eine Glasfaser ohne Zwischenverstärker dient, über die auch der notwendige klassische Kanal auf einer anderen spektralen Trägerfrequenz geleitet wird.

4. Quantenkryptographieverfahren nach einem der Ansprüche 1 oder 2, **dadurch gekennzeichnet, daß** die Polarisationserhaltung in der quantenübertragenden Faser und den anschließenden Komponenten durch Messungen überprüft und mittels elektrooptischer Flüssigkristallmodulatoren, erforderlichenfalls in Verbindung mit einer anderen Retardierungsplatte, nachgestellt wird.

5. Quantenkryptographieverfahren nach Anspruch 1, **dadurch gekennzeichnet, daß** als Quantenkanal der freie Raum für die Übertragung einzelner Quantenzustände des Lichtes dient, wobei bei Übertragung in der Atmosphäre bzw. von bzw. zu bzw. im Weltall zwischen Satelliten, die Störung durch das Sonnenlicht durch Verwendung einer der Absorptionslinien der Sonnenhülle vermindert wird.

## Claims

1. Quantum cryptography method for the secure transmission of random keys using the polarization adjusting method in which statistical binary number sequences are generated at the transmitter end to alter the polarization of individual photons transmitted over a quantum channel and in which polarization analysis and, subsequently, photon counting are carried out at the receiving end, the polarization alteration being effected by electrooptical liquid crystal modulators in the form of electrically rotatable retardation plates, **characterized in that** the two birefringent axes thereof, hereinafter called the indicatrix, are rotated by the applied electric field through an angle θ dependent on the field strength of said electric field, the plates thereby acting as lambda/2 retardation plates for rotating incident elliptically polarized light through the angle 2 θ.

2. Quantum cryptography method according to claim 1, **characterized in that**, in order to produce large rotation angles, a plurality of lambda/2 retardation plates are arranged in tandem such that, at field zero, the fast axes of each individual plate are at an angle β ≤ 2 Ω, Ω being the maximum angle through which the indicatrix of the individual element is rotatable by the field.

3. Quantum cryptography method according to claim 1, **characterized in that** a glass fibre without intermediate amplifier serves as the quantum channel, said glass fibre also carrying the necessary classical channel on a different spectral carrier frequency.

4. Quantum cryptography method according to any one of claim 1 or 2,
**characterized in that** the conservation of polarization in the quantum-transmitting fibre and in the following components is checked by measurements and is adjusted by means of electrooptical liquid crystal modulators, if necessary in conjunction with another retardation plate.

5. Quantum cryptography method according to claim 1, **characterized in that** the free space for the transmission of individual quantum states of the light serves as the quantum channel, wherein, in the case of transmission in the atmosphere or from or to or in space between satellites, the interference by sunlight is reduced by using one of the absorption lines of the solar atmosphere.

## Revendications

1. Procédé de cryptographie quantique permettant de transmettre en toute sécurité des clés aléatoires en utilisant un procédé de réglage de polarisation, dans lequel des séquences de chiffres binaires statistiques sont générées du côté de l'émetteur, lesquelles modifient la polarisation de photons individuels transmis sur un canal quantique, dans lequel une analyse de la polarisation suivie par un comptage des photons est réalisée du côté du récepteur, la modification de la polarisation intervenant par le biais de modulateurs à cristaux liquides électro-optiques conçus comme plaques de retardement à rotation électrique, **caractérisé en ce que** leurs deux axes biréfringents, appelés ci-après "indicatrice", sont soumis à une rotation d'angle θ dépendant de l'intensité du champ électrique créé, de sorte qu'en tant que plaque de retardement lambda/2, ils tournent d'un angle 2 θ la lumière elliptiquement polarisée qui rencontre la plaque .

2. Procédé de cryptographie quantique selon la revendication 1, **caractérisé en ce que** pour générer des angles de rotation plus importants, plusieurs plaques de retardement lambda/2 sont disposées les unes à la suite des autres de telle sorte que les axes rapides de chacune des plaques présentent un angle β ≤ Ω dans le champ zéro, Ω constituant l'angle maximum de la rotation à laquelle peut être soumise par le champ l'indicatrice de l'élément individuel.

3. Procédé de cryptographie quantique selon la revendication 1, **caractérisé en ce qu'**une fibre de verre, dépourvue d'amplificateur intermédiaire sert de canal quantique, fibre par l'intermédiaire de laquelle le canal classique nécessaire passe également sur une autre fréquence porteuse spectrale.

4. Procédé de cryptographie quantique selon une des revendication 1 ou 2, **caractérisé en ce que** le maintien de la polarisation dans la fibre de transmission quantique et dans les composants suivants est vérifié au moyen de mesures et, si nécessaire, réglé au moyen de modulateurs électro-optiques à cristaux liquides en association avec une autre plaque de retardement.

5. Procédé de cryptographie quantique selon la revendication 1, **caractérisé en ce que** l'espace libre pour la transmission de chacun des états quantiques de la lumière sert de canal quantique, les perturbations occasionnées par la lumière du soleil lors de transmissions entre satellites dans l'atmosphère, en provenance ou en direction de l'espace ou dans l'espace lui-même, étant réduites au moyen d'une des lignes d'absorption de l'enveloppe solaire.
